# EUROPÄISCHE PATENTSCHRIFT

(11) **EP 3 560 093 B1**
(45) Veröffentlichungstag und Bekanntmachung des Hinweises auf die Patenterteilung: **17.02.2021**
(21) Anmeldenummer: 17829187.8
(22) Anmeldetag: 20.12.2017
(51) Int. Cl.: H02P 9/10, H02P 23/12, H02P 23/14

(54) **SPANNUNGSERZEUGUNGSVORRICHTUNG UND VERFAHREN ZUM BETREIBEN EINER SPANNUNGSERZEUGUNGSVORRICHTUNG**
VOLTAGE GENERATING DEVICE AND METHOD FOR OPERATING A VOLTAGE GENERATING DEVICE
DISPOSITIF DE PRODUCTION DE TENSION ET PROCÉDÉ POUR FAIRE FONCTIONNER UN DISPOSITIF DE PRODUCTION DE TENSION

(30) Priorität: 02.02.2017 DE 102017201690
(43) Veröffentlichungstag der Anmeldung: 30.10.2019
(73) Patentinhaber: Siemens Mobility GmbH, 81739 München (DE)
(72) Erfinder: HOFFMANN, Wolfgang, 91052 Erlangen (DE)
(86) Internationale Anmeldenummer: PCT/EP2017/083742
(87) Internationale Veröffentlichungsnummer: WO 2018/141460

(56) Entgegenhaltungen:
- DE-A1-102004 025 241
- DE-A1-102010 040 863
- DE-A1-102011 088 314
- DE-A1-102015 118 949

## Beschreibung

Die Erfindung betrifft eine Spannungserzeugungsvorrichtung und ein Verfahren zum Betreiben einer derartigen Vorrichtung. Bekannt sind regelbare Spannungserzeugungsvorrichtungen zum Generieren einer elektrischen Spannung für Verbraucher. Dabei werden Spannungsregler und Stromregler verwendet, wobei Lastschwankungen mittels einer Kennlinie berücksichtigt werden, wobei Parameter für die Kennlinie nur sehr aufwendig erhältlich sind, beispielsweise aus Datenblättern eines antreibenden Generators.

DE 10 2004 025 241 A1 offenbart ein Generatormodell zur Vorhersage einer Generator-Kenngröße, wobei das Generatormodell zu einer Prädiktion zukünftiger Werte eines Erregerstroms eines Generators vorgesehen ist.

DE 10 2015 118 949 A1 offenbart eine Generatorerregungsregelung unter Verwendung von Pulsbreitenmodulation.

Es ist eine Aufgabe der vorliegenden Erfindung, eine verbesserte Spannungserzeugungsvorrichtung bereitzustellen.

Die Aufgabe wird gemäß einem ersten Aspekt gelöst mit einer Spannungserzeugungsvorrichtung, wie durch die Merkmale des unabhängigen Anspruchs 1 definiert.

Auf diese Weise ist es für die erfindungsgemäße Spannungserzeugungsvorrichtung möglich, totzeitbehaftete Messsignale zu verwenden. Aufgrund des korrigierten Modellwerts des elektrischen Erregerstroms wird im Ergebnis ein verbessertes Regelverhalten der elektrischen Spannungserzeugungsvorrichtung realisiert. Insbesondere kann dadurch eine verbesserte Dynamik der Regelung der Spannungserzeugungsvorrichtung erreicht werden. Auf diese Weise wird eine Art Mischprodukt aus einem aktuellen Modellwert und dem gemessenen elektrischen Erregerstroms gebildet, wobei dadurch ein verbesserter Modellwert des elektrischen Erregerstroms erhalten wird. Auf diese Weise wird der vergangene Modellfehler zur Korrektur des aktuellen Modellwerts des elektrischen Erregerstroms verwendet, der besser den realen Gegebenheiten entspricht. Auf diese Weise wird eine verbesserte elektrische Erregerspannung für eine bessere Dynamik der regelbaren Spannungserzeugungsvorrichtung bereitgestellt.

Gemäß einem zweiten Aspekt wird die Aufgabe gelöst mit einem Verfahren zum Betreiben einer Spannungserzeugungsvorrichtung, wie durch die Merkmale des unabhängigen Anspruchs 4 definiert.

Eine vorteilhafte Weiterbildung der Spannungserzeugungsvorrichtung zeichnet sich dadurch aus, dass das Korrekturelement ferner ein Glättungsglied für den Korrekturwert des Modellwerts des elektrischen Erregerstroms aufweist. Auf diese Weise kann mit einem optionalen Glättungsglied, im Falle, dass der Messwert stark verrauscht ist, der Korrekturwert mit dem Glättungsglied geglättet werden.

Eine weitere vorteilhafte Weiterbildung der Spannungserzeugungsvorrichtung zeichnet sich dadurch aus, dass das Totzeitglied des Korrekturelements im Wesentlichen die gleiche Totzeit aufweist wie die Totzeit zwischen dem Istwert des elektrischen Erregerstroms und dem Messwert des elektrischen Erregerstroms. Auf diese Weise kann für das Modell auf einfach Weise eine Totzeitbehaftung des gemessenen elektrischen Erregerstroms berücksichtigt werden.

Als besonders vorteilhaft wird bei der Erfindung angesehen, dass es mit einfachen technischen Mitteln möglich ist, Lastschwankungen der Spannungserzeugungsvorrichtung dynamischer auszuregeln. Dazu müssen vorteilhaft keine aufwendigen Zusatzeinrichtungen benutzt werden, sondern es genügt zum Ermitteln des elektrischen Erregerstroms ein Bereitstellen eines korrigierten Modellwerts des elektrischen Erregerstroms.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele, die im Zusammenhang mit Figuren näher erläutert werden.
- FIG 1: zeigt in prinzipieller Weise ein Blockschaltbild einer Spannungserzeugungsvorrichtung;
- FIG 2: zeigt ein prinzipielles Blockschaltbild einer herkömmlichen Stromregelungseinrichtung;
- FIG 3: zeigt die Stromregelungseinrichtung von FIG 2 in einer anderen Darstellung;
- FIG 4: zeigt ein Blockschaltbild einer vorgeschlagenen Stromregelungseinrichtung mit einer Korrektureinrichtung;
- FIG 5: zeigt die Stromregelungseinrichtung von FIG 4 mit einem höheren Detaillierungsgrad der Korrektureinrichtung;
- FIG 6: zeigt zeitliche Verläufe eines elektrischen Erregerstroms und eines Modellwerts des elektrischen Erregerstroms;
- FIG 7: zeigt zeitliche Verläufe eines elektrischen Erregerstroms und eines erfindungsgemäß korrigierten Modellwerts des elektrischen Erregerstroms;
- FIG 8: zeigt simulationstechnisch ermittelte Verläufe des elektrischen Erregerstroms; und
- FIG 9: zeigt einen prinzipiellen Ablauf einer Ausführungsform des erfindungsgemäßen Verfahrens.

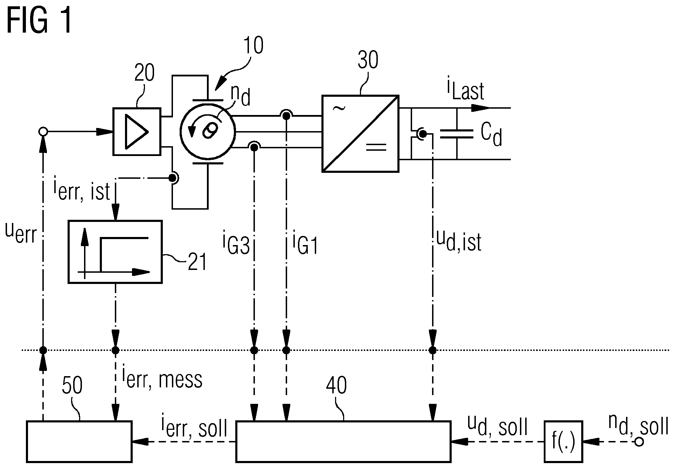

FIG 1 zeigt ein prinzipielles Blockschaltbild einer Ausführungsform einer regelbaren Spannungserzeugungsvorrichtung 100. Man erkennt eine fremderregte Generatoreinrichtung 10 (z.B. in Form eines fremderregten Synchrongenerators), die mittels eines Erregergeräts bzw. einer Erregereinrichtung 20 elektrisch angeregt wird. Eine dreiphasige elektrische Ausgangsspannung der Generatoreinrichtung 10 wird einer Gleichrichtereinrichtung 30, vorzugsweise in Form einer B6-Brückenschaltung zugeführt. Am Ausgang der Gleichrichtereinrichtung 30 steht an einem Zwischenkreiskondensator C_{d} eine gleichgerichtete elektrische Ausgangsspannung u_{d} (Zwischenkreisspannung) zur Verfügung, an die eine Last (nicht dargestellt), beispielsweise in Form eines elektrischen Fahrmotors einer Lokomotive, anschließbar ist.

Eine Drehzahl n_{d} der fremderregten Generatoreinrichtung 10 wird dabei von einer Steuerungseinrichtung (z.B. von einem Dieselaggregat, nicht dargestellt) der Generatoreinrichtung 10 gesteuert, wobei zum Einstellen einer definierten Drehzahl n_{d} beispielsweise eine Dieseleinspritzmenge des Dieselaggregats entsprechend dosiert wird.

Im unteren Bereich von FIG 1 ist eine Regelungsvorrichtung 40, 50 erkennbar, an die gemessene Signale der Regelstrecke in Form der Erregereinrichtung 20, der Generatoreinrichtung 10, und der Gleichrichtereinrichtung 30 über einen gestrichelt angedeuteten Bus übermittelt werden. Mittels der Regelungsvorrichtung 40, 50 wird für die Erregereinrichtung 20 der Generatoreinrichtung 10 eine elektrische Erregerspannung uₑᵣᵣ bereitgestellt, mittels der die elektrische Zwischenkreisspannung u_{d} auf einen Sollwert u_{d,soll} geregelt wird, wobei der Sollwert der elektrischen Zwischenkreisspannung ud eine Funktion der Generatordrehzahl n_{d} ist. Man erkennt eine Spannungsregelungseinrichtung 40, die funktional mit einer Stromregelungseinrichtung 50 verschaltet ist. An die Spannungsregelungseinrichtung 40 werden elektrische Phasenströme i_{G1}, i_{G3} der Generatoreinrichtung 10 zugeführt sowie weiterhin ein gemessener Wert der elektrischen Zwischenkreisspannung u_{d,ist}. Weiterhin wird der Spannungsregelungseinrichtung 40 ein Sollwert der elektrischen Zwischenkreisspannung u_{d,soll} zugeführt, der aus einer definierten Funktion f(.) aus einem Drehzahlsollwert n_{d,soll} der Generatoreinrichtung 10 gebildet wird.

Mittels der Spannungsregelungseinrichtung 40 wird ein Sollwert des elektrischen Erregerstroms i_{err,soll} ermittelt, der einer Stromregelungseinrichtung 50 zugeführt wird. Der Stromregelungseinrichtung 50 wird weiterhin ein Messwert des elektrischen Erregerstroms i_{err,mess} zugeführt, der von einem gemessenen Istwert des elektrischen Erregerstroms i_{err,ist} abgeleitet ist.

Die Stromregelungseinrichtung 50 ermittelt aus den zugeführten Größen ein elektrisches Ansteuersignal in Form der elektrischen Erregerspannung uₑᵣᵣ für die Erregereinrichtung 20. Man erkennt ein zwischen dem gemessenen Istwert des elektrischen Erregerstroms i_{err,ist} und dem Messwert des elektrischen Erregerstroms i_{err,mess} angeordnetes Totzeitglied 21, durch das eine Totzeitbehaftung bzw. Zeitverzögerung des Messwerts des elektrischen Erregerstroms i_{err,mess} an der Stromregelungseinrichtung 50 verdeutlicht werden soll. Die Totzeiten werden insbesondere durch Laufzeiten der gemessenen elektrischen Größen im Zuge der Übermittlung an die Stromregelungseinrichtung 50 generiert. Im Ergebnis verliert dabei die Stromregelungseinrichtung 50 dadurch an Phasenreserve, wobei die genannte Phasenreserve nicht mehr ausreicht, um im Zusammenwirken mit der Spannungsregelungseinrichtung 40 die elektrische Zwischenkreisspannung u_{d,ist} mit einer ausreichenden Dynamik zu regeln.

Beim Stand der Technik liefert die unterlagerte Stromregelung nur gute Ergebnisse in Bezug auf die Dynamik der Generatorregelung, wenn das Modell ausreichend genau ist. Aufgrund von Temperaturabhängigkeiten und Fertigungstoleranzen wird ein voreingestelltes Modell während der Lebensdauer nie über eine ganze Flotte von mittels der Spannungserzeugungsvorrichtung 100 getriebenen Lokomotiven genau genug sein.

Die herkömmliche Spannungsregelung wird daher auf vielen Loks nicht ausreichend dynamisch sein, wobei aber in bestimmten Betriebsfällen unerwünschte Schutzmechanismen, wie zum Beispiel Momentenbegrenzungen aktiv werden können.

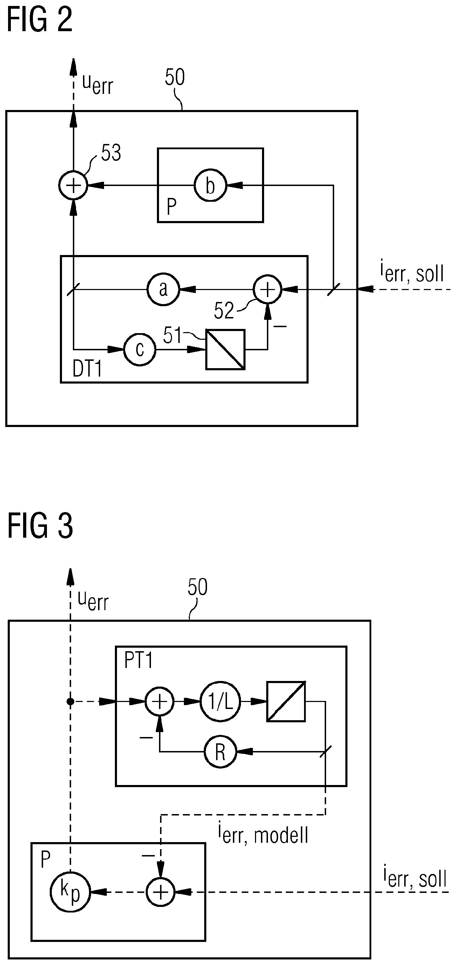

FIG 2 zeigt eine Stromregelungseinrichtung 50 gemäß Stand der Technik, wobei die Stromregelungseinrichtung 50 als ein PDT1-Glied ausgebildet ist. Der totzeitbehaftete Messwert des elektrischen Erregerstroms i_{err,mess} wird herkömmlich von der Stromregelungseinrichtung 50 nicht verwendet, weshalb die genannte Totzeitbehaftung kein Problem darstellt. Man erkennt, dass der von der Spannungsregelungseinrichtung 40 (nicht dargestellt) kommende Sollwert des elektrischen Erregerstroms i_{err,soll} einem DT1-Glied (Differenzierglied mit Zeitverzögerung, "realer Differenzierer") zugeführt wird.

Dabei repräsentieren die Parameter a, c des DT1-Glieds anlagenspezifische Koeffizienten, die ein möglichst gutes Regelverhalten realisieren. Das DT1-Glied umfasst einen ersten Summierer 52, dem der Sollwert des elektrischen Erregerstroms i_{err,soll} zugeführt wird. Die Elemente a und c des DT1-Glieds repräsentieren anlagenspezifische Parameter, die ein gutes Regelverhalten des Gesamtsystems unterstützen. Man erkennt ein zwischen dem Parameter c und dem Summierer 52 verschaltetes Integrierglied 51. Ein Ausgangssignal des DT1-Glieds wird einem zweiten Summierer 53 zugeführt, an den ferner ein Ausgangssignal eines Proportionalglieds P mit einem anlagenspezifischen Parameter b zugeführt wird. An das Proportionalglied P wird der Sollwert des elektrischen Erregerstroms i_{err,soll} zugeführt. Mittels des zweiten Summierers 53 wird die elektrische Erregerspannung uₑᵣᵣ für die Erregereinrichtung 20 gebildet.

FIG 3 zeigt die Stromregelungseinrichtung 50 von FIG 2 in einer anderen Darstellung. Man erkennt nunmehr ein PT1-Glied, das ein Modell der Erregerwicklung der Generatoreinrichtung 10 darstellt, wobei die Parameter L und R eine Induktivität bzw. einen Ohm'schen Widerstand der Erregerwicklung repräsentieren. Das Eingangssignal des PT1-Glieds ist die vom Proportionalglied P mit dem Verstärkungsfaktor k_{P} gebildete elektrische Erregerspannung uₑᵣᵣ, wobei ein Ausgangssignal des PT1-Glieds einen Modellwert des elektrischen Erregerstroms i_{err,modell} darstellt. Eine Regelabweichung zwischen dem Modellwert des elektrischen Erregerstroms i_{err,modell} und dem Sollwert des elektrischen Erregerstroms i_{err,soll} wird dem Proportionalglied k_{P} zugeführt, dessen Ausgangsgröße die Stellgröße in Form der elektrischen Erregerspannung uₑᵣᵣ für die Erregereinrichtung 20 ist.

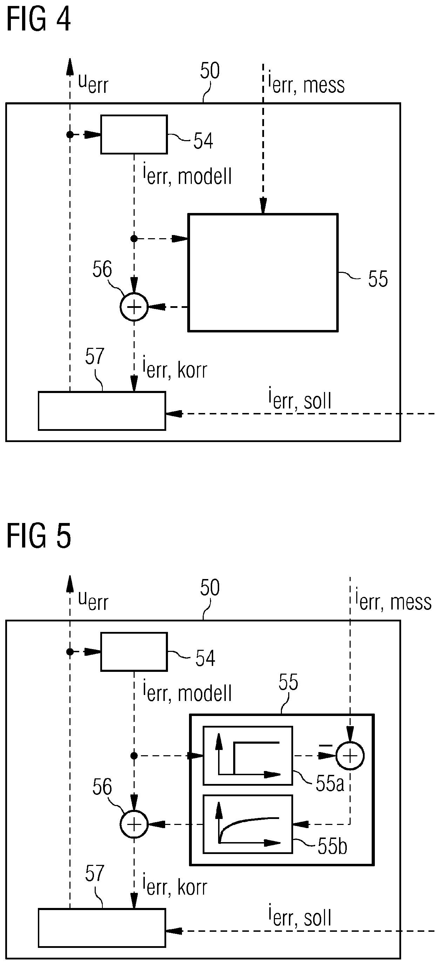

FIG 4 zeigt eine Ausführungsform der erfindungsgemäßen Stromregelungsvorrichtung 50. Man erkennt innerhalb der Stromregelungseinrichtung 50 ein Modell 54, das ein mathematisches Modell der Erregerwicklung der Generatoreinrichtung 10 repräsentiert und ein Abbild der elektrischen Erregerspannung uₑᵣᵣ in Form eines Modellwerts des elektrischen Erregerstroms i_{err,modell} generiert. Der modellierte elektrische Erregerstrom i_{err,modell} wird einem Korrekturelement 55 zugeführt, dem weiterhin ein Messwert des totzeitbehafteten elektrischen Erregerstroms iₑᵣᵣ zugeführt wird.

Ein Ausgangssignal des Korrekturelements 55 wird einem dritten Summierer 56 zugeführt, wobei der dritte Summierer 56 einen korrigierten Modellwert des elektrischen Erregerstroms i_{err,korr} bildet, der dem Istwert des elektrischen Erregerstroms ierr,mess besser entspricht als der Modellwert des elektrischen Erregerstroms i_{err,modell} und der einem Regelungselement 57, z.B. in Form eines P-Reglers, I-Reglers, PI-Reglers, nichtlinearen Reglers, usw. zugeführt wird. Man erkennt also, dass von der Stromregelungseinrichtung 50 der totzeitbehaftete Erregerstrommesswert i_{err,mess} verwendet wird.

FIG 5 zeigt die Stromregelungseinrichtung 50 von FIG 4 mit dem Korrekturelement 55 in einem höheren Detaillierungsgrad. Das Korrekturelement 55 enthält ein Totzeitglied 55a mit im Wesentlichen derselben Totzeit wie die Totzeit zwischen dem Istwert des elektrischen Erregerstroms i_{err,ist} und dem Messwert des elektrischen Erregerstroms i_{err,mess} sowie ein optionales Glättungsglied 55b in Form eines PT1-Glieds. Im Ergebnis wird auf diese Weise also ein um die Totzeit verzögerter Fehler, also ein "alter" Fehler des Modells 54 zur Generierung eines korrigierten Modellwerts des elektrischen Erregerstroms verwendet.

Bei einer Totzeit von ca. 100ms beträgt die Toleranz für die Übereinstimmung der beiden genannten Totzeiten ca. ± 2ms, d.h. ± 2% vom Gesamtwert. Eine Zeitverzögerung des Totzeitglieds 55a wird vorab ermittelt am Totzeitglied 55a einmalig eingestellt (einmalige Parametrierung). Die Dauer der Totzeit hängt von Komponenten der Spannungserzeugungsvorrichtung 100 ab, wobei davon ausgegangen wird, dass sich die genannte Dauer der Totzeit im Betrieb der Spannungserzeugungsvorrichtung 100 nicht ändert.

Die Differenz zwischen dem verzögerten Modellwert des elektrischen Erregerstroms i_{err,modell} und dem totzeitbehafteten Messwert des elektrischen Erregerstroms i_{err,mess} entspricht dem vergangenen Fehler zwischen dem Modellwert des elektrischen Erregerstroms i_{err,modell} und dem Istwert des elektrischen Erregerstroms i_{err,ist} vor Ablauf der Totzeit.

Es wird also der Istwert des elektrischen Erregerstroms, wie er vor Ablauf der Totzeit war, vom Modellwert des elektrischen Erregerstroms, wie er vor Ablauf der Totzeit war, subtrahiert.

Auf diese Weise ist bekannt, wie groß die Differenz bzw. der Fehler zwischen dem Istwert und dem Modellwert des elektrischen Erregerstroms vor Ablauf der Totzeit war, wobei unter der Annahme, dass dieser Fehler aktuell noch näherungsweise besteht, der Fehler als Korrekturterm bzw. Korrekturwert am dritten Summierer 56 zum aktuellen Modellwert des elektrischen Erregerstroms i_{err,modell} addiert wird. Dem Regelungselement 57 wird auf diese Weise ein um einen alten Fehler korrigierter Modellwert des elektrischen Erregerstroms i_{err,korr} zugeführt, der daraus zusammen mit dem von der Spannungsregelungseinrichtung 40 zugeführten Sollwert des Erregerstroms i_{err,soll} die elektrische Erregerspannung uₑᵣᵣ bildet.

Der Korrekturterm des Korrekturelements 55 kann mittels des optionalen Glättungsglieds 55b geglättet werden. Dadurch wird dieser zwar etwas phasenverzögert, bei starkem Rauschanteil des messtechnisch erfassten elektrischen Erregerstroms i_{err,mess} kann diese Maßnahme im Einzelfall aber vorteilhaft sein.

In der Erfindung wird somit gegenüber herkömmlichen Verfahren der gemessene elektrische Erregerstrom i_{err,mess} in der Stromregelungseinrichtung 50 verwendet. Dadurch wird der Modellwert des elektrischen Erregerstroms präziser abgebildet. Das vorgeschlagene Vorgehen ähnelt einer Realisierung einer Luenberger- oder Kalman-Rückführung in Beobachterstrukturen.

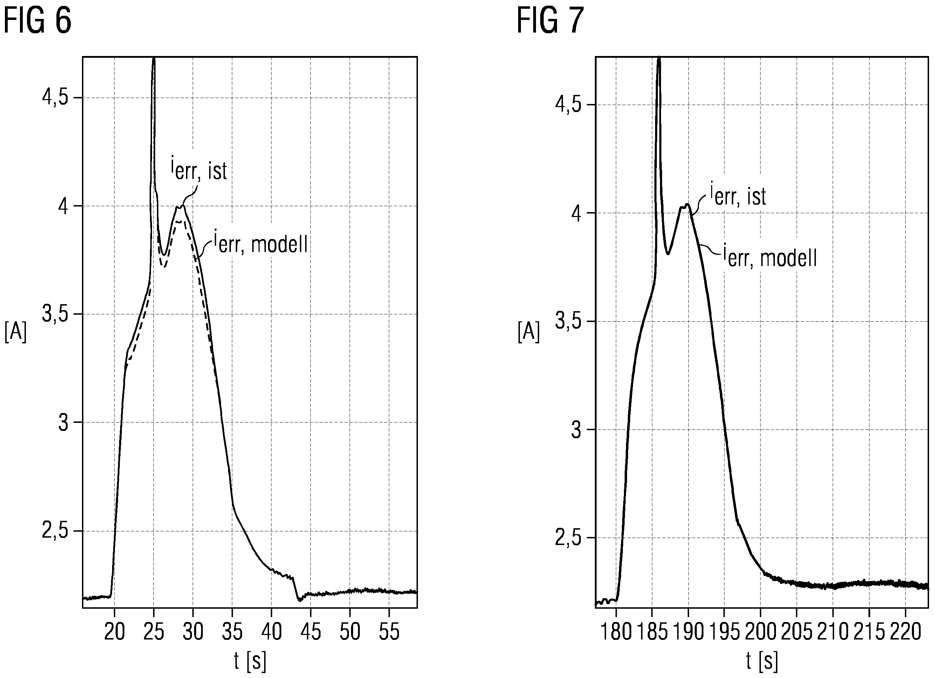

Die Figuren 6 und 7 zeigen Messungen an einer als Last der Spannungserzeugungsvorrichtung 100 ausgebildeten dieselelektrischen Lokomotive, in deren Leittechnik die Erfindung umgesetzt ist.

FIG 6 zeigt einen zeitlichen Verlauf eines Istwerts des elektrischen Erregerstroms i_{err,ist} und einen zeitlichen Verlauf eines Modellwerts des elektrischen Erregerstroms i_{err,modell}, wobei die erfindungsgemäße Korrektur deaktiviert ist.

FIG 7 zeigt zeitliche Verläufe des Istwerts des elektrischen Erregerstroms i_{err,ist} und des modellierten Erregerstroms i_{err,modell} mit erfindungsgemäßer Korrektur. Man erkennt, dass in FIG 7 die beiden genannten Verläufe weitgehend übereinstimmen, wodurch eine Regelungscharakteristik der gesamten Spannungserzeugungsvorrichtung 100 deutlich verbessert ist.

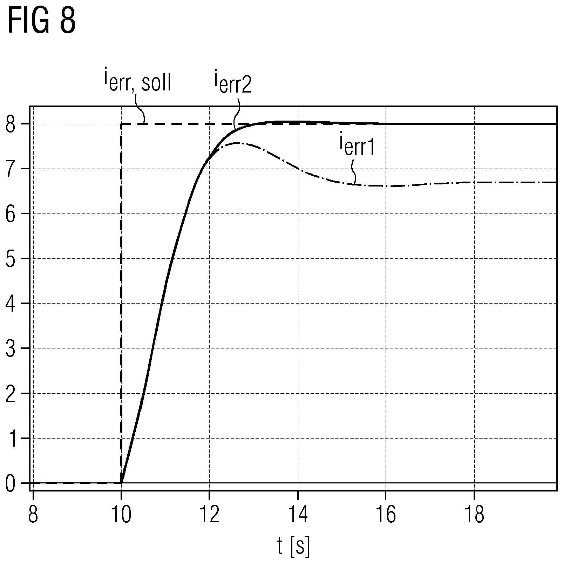

FIG 8 zeigt drei simulationstechnisch ermittelte Zeitverläufe von elektrischen Erregerströmen in einem Regelkreis mit der Erregereinrichtung 20, einer Rotorwicklung der Generatoreinrichtung 10 und der Stromregelungseinrichtung 50 ohne Berücksichtigung von sonstigen Komponenten der Spannungserzeugungsvorrichtung 100. Simuliert wird auf diese Weise das Erregerwicklungs-System der Generatoreinrichtung 10, das im Wesentlichen durch ein PT1-Glied repräsentiert wird. Dabei soll eine Auswirkung des vorgeschlagenen Korrekturelements 55 der Stromregelungseinrichtung 50 im geschlossenen Regelkreis verdeutlicht werden.

Erkennbar ist ein sprungartiger Soll-Verlauf des elektrischen Erregerstroms i_{err,soll}. Die oben genannte Regelstrecke ist erster Ordnung mit einer Totzeit. Die Modellparameter Induktivität L und Ohm'scher Widerstand R des simulierten PT1-Modells sind gegenüber den tatsächlichen Gegebenheiten der Regelstrecke um ca. 20% verstimmt, wodurch eine Abweichung des Modells von den tatsächlichen Gegebenheiten ausgedrückt werden soll.

Bei gleicher Anstiegszeit schwingt der Verlauf des elektrischen Erregerstroms iₑᵣᵣ₁ unter Berücksichtigung der 20%-igen Abweichung ohne Verwendung des Korrekturelements 55 deutlich über den Sollwert und stabilisiert sich bei einem falschen Endwert. Die Verwendung des Korrekturelements 55 liefert einen zeitlichen Verlauf des geregelten Istwerts des Erregerstroms iₑᵣᵣ₂, der auf den korrekten Endwert einläuft und dabei kaum überschwingt. Das Korrekturelement 55 ist auf diese Weise in der Lage, die 20%-ige Abweichung des Modells von der Strecke ausgleichen. Messungen auf einer als Last der Spannungserzeugungsvorrichtung 100 ausgebildeten Fahrmotoren einer Lokomotive bestätigen dieses Verhalten.

Das vorgeschlagene Verfahren kann auch für ein korrigierendes Modellieren anderer Anwendungen ohne Regelkreis vorgesehen sein. Dabei kann an Prozesse gedacht werden, in denen Prozessgrößen nicht schnell genug zur Verfügung stehen, z.B. Prozesse mit einer Überwachung von schwer messbaren Messgrößen, insbesondere Messgrößen mit Totzeitbehaftung, in denen es nicht akzeptabel ist, eine infolge der Totzeitbehaftung zeitverzögerte Übermittlung der Messgröße abzuwarten. Auf diese Weise können z.B. Not-Aus-Schalter im Falle eines Überschreitens einer definierten Schwelle der Messgröße realisiert werden.

Die Erfindung unterstützt eine hohe Dynamik der Spannungsregelung über alle Lokomotiven und die Lebensdauer einer Flotte von Lokomotiven.

Vorteilhaftweise kann das erfindungsgemäße Verfahren als eine Software implementiert werden, die auf einem Mikrorechner (nicht dargestellt) der Regelungsvorrichtung 40, 50 ausgeführt wird. Mit einer derartigen Implementierung ist vorteilhaft eine einfache Abänderung bzw. Anpassung des erfindungsgemäßen Verfahrens möglich.

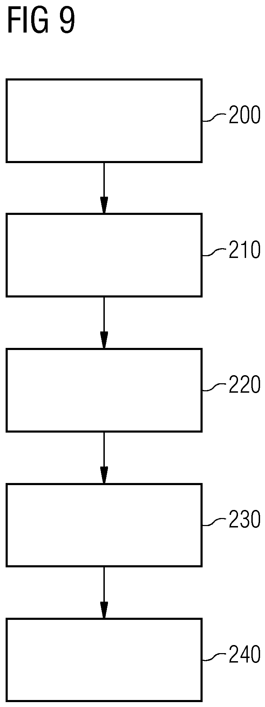

FIG 9 zeigt ein prinzipielles Ablaufdiagramm einer Ausführungsform des erfindungsgemäßen Verfahrens zum Betreiben einer Spannungserzeugungsvorrichtung 100 mit einer mechanisch angetriebenen, fremderregten Generatoreinrichtung 10 und einer mit der Generatoreinrichtung 10 verschalteten Gleichrichtereinrichtung 30.

In einem Schritt 200 wird ein Generieren einer gleichgerichteten elektrischen Ausgangsspannung der Generatoreinrichtung 10 durchgeführt.

In einem Schritt 210 wird ein messtechnisches Erfassen eines Messwerts des elektrischen Erregerstroms für die Generatoreinrichtung 10 durchgeführt.

In einem Schritt 220 wird ein Erstellen eines Modellwerts des elektrischen Erregerstroms durchgeführt.

In einem Schritt 230 wird ein Korrigieren des Modellwerts mittels eines Korrekturelements 55 einer Stromregelungseinrichtung 50 derart durchgeführt, dass der Modellwert des elektrischen Erregerstroms definiert besser mit dem Messwert des elektrischen Erregerstroms übereinstimmt, wobei mittels des Korrekturelements der Modellwert des elektrischen Erregerstroms mit Hilfe des totzeitbehafteten Messwerts des elektrischen Erregerstroms korrigiert wird, wobei ein aktueller Messwert des elektrischen Erregerstroms und ein verzögerter Wert des Modellwerts des elektrischen Erregerstroms miteinander verglichen werden, wobei eine Differenz als Korrekturwert zur Verbesserung des Modellwerts des elektrischen Erregerstroms verwendet wird.

In einem Schritt 240 wird ein Generieren einer elektrischen Erregerspannung uₑᵣᵣ für eine Erregereinrichtung 20 der Generatoreinrichtung 10 aus dem korrigierten Modellwert und einem Sollwert des elektrischen Erregerstroms durchgeführt.

Zusammenfassend wird mit der vorliegenden Erfindung eine korrigierend modellierte Realisierung einer regelbaren, elektrischen Spannungsquelle mit einem fremderregten Synchrongenerator und einer Gleichrichterbrücke erreicht, die auf einfache Weise vorteilhaft eine hochdynamische Ausregelung von unterschiedlichen Lasten ermöglicht.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Spannungserzeugungsvorrichtung (100), aufweisend:
- eine mechanisch antreibbare, fremderregte Generatoreinrichtung (10);
- wobei eine elektrische Ausgangsspannung der Generatoreinrichtung (10) mittels einer Gleichrichtereinrichtung (30) gleichrichtbar ist;
- wobei die Spannungserzeugungsvorrichtung (100) mittels einer Regelungsvorrichtung (40, 50) regelbar ist;
- wobei eine Stromregelungseinrichtung (50) ein Modell (54) einer Erregerwicklung der Generatoreinrichtung (10) aufweist, wobei mittels des Modells (54) ein Modellwert des elektrischen Erregerstroms (i_{err,modell}) der Generatoreinrichtung (10) ermittelbar ist;
- wobei die Stromregelungseinrichtung (50) ferner ein Korrekturelement (55) aufweist, mittels dem der Modellwert des elektrischen Erregerstroms (i_{err,modell}) derart korrigierbar ist, dass der Modellwert des elektrischen Erregerstroms definiert besser mit einem Istwert (i_{err,ist}) des elektrischen Erregerstroms übereinstimmt,
- wobei mittels des Korrekturelements (55) der Modellwert des elektrischen Erregerstroms (i_{err,modell}) mit Hilfe eines totzeitbehafteten Messwerts des elektrischen Erregerstroms (ierr) korrigierbar ist,
**dadurch gekennzeichnet dass** das Korrekturelement (55) so ausgebildet ist,
- dass ein aktueller, totzeitbehafteter Messwert des
elektrischen Erregerstroms (i_{err,mess}) und ein verzögerter Wert des Modellwerts des elektrischen Erregerstroms
(i_{err,modell}) miteinander verglichen werden,
- wobei eine Differenz als Korrekturwert zur Verbesserung des Modellwerts des elektrischen Erregerstroms (i_{err,modell}) verwendet wird, wobei mittels eines Regelungselements (57) aus dem korrigierten Modellwert des elektrischen Erregerstroms (i_{err,korr}) und einem Sollwert (i_{err,soll} ) des elektrischen Erregerstroms eine elektrische Erregerspannung (uₑᵣᵣ) für die Erregereinrichtung (20) generierbar ist.

2. Spannungserzeugungsvorrichtung (100) nach Anspruch 1, **dadurch gekennzeichnet, dass** das Korrekturelement (55) ferner ein Glättungsglied (55b) für den Korrekturwert des Modellwerts des elektrischen Erregerstroms aufweist.

3. Spannungserzeugungsvorrichtung (100) nach Anspruch 2, **dadurch gekennzeichnet, dass** ein Totzeitglied (55a) des Korrekturelements (55) im Wesentlichen die gleiche Totzeit aufweist wie die Totzeit zwischen dem Istwert des elektrischen Erregerstroms (i_{err,ist}) und dem Messwert des elektrischen Erregerstroms (i_{err,mess}) .

4. Verfahren zum Betreiben einer Spannungserzeugungsvorrichtung (100) mit einer mechanisch angetriebenen, fremderregten Generatoreinrichtung (10) und einer mit der Generatoreinrichtung (10) verschalteten Gleichrichtereinrichtung (30), aufweisend die Schritte:
- Generieren einer gleichgerichteten elektrischen Ausgangsspannung der Generatoreinrichtung (10);
- Messtechnisches Erfassen eines Messwerts des elektrischen Erregerstroms (i_{err,mess}) für die Generatoreinrichtung (10);
- Erstellen eines Modellwerts des elektrischen Erregerstroms (i_{err,modell}) ;
- Korrigieren des Modellwerts des elektrischen Erregerstroms (i_{err,modell}) mittels eines Korrekturelements (55) einer Stromregelungseinrichtung (50) derart, dass der Modellwert des elektrischen Erregerstroms (i_{err,modell}) definiert besser mit einem Istwert (i_{err,ist}) des elektrischen Erregerstroms (i_{err,mess}) übereinstimmt, wobei mittels des Korrekturelements (55) der Modellwert des elektrischen Erregerstroms (i_{err,modell}) mit Hilfe eines totzeitbehafteten Messwerts des elektrischen Erregerstroms (iₑᵣᵣ) korrigiert wird, **dadurch gekennzeichnet, dass** ein aktuelle, totzeitbehafteter Messwert des elektrischen Erregerstroms (i_{err,mess}) und ein verzögerter Wert des Modellwerts des elektrischen Erregerstroms (i_{err,modell}) miteinander verglichen werden, wobei eine Differenz als Korrekturwert zur Verbesserung des Modellwerts des elektrischen Erregerstroms (i_{err,modell}) verwendet wird; und
- Generieren einer elektrischen Erregerspannung (uₑᵣᵣ) für eine Erregereinrichtung (20) der Generatoreinrichtung (10) aus dem korrigierten Modellwert des elektrischen Erregerstroms (i_{err,korr}) und einem Sollwert (i_{err,soll}) des elektrischen Erregerstroms.

5. Verfahren nach Anspruch 4, wobei für ein Totzeitglied (55a) des Korrekturelements (55) im Wesentlichen die gleiche Totzeit verwendet wird wie eine Totzeit zwischen dem Istwert des elektrischen Erregerstroms (i_{err,ist}) und dem Messwert des elektrischen Erregerstroms (i_{err,mess})

## Claims

1. Voltage generating apparatus (100), comprising:
- a mechanically drivable, separately excited generator device (10);
- wherein an electric output voltage of the generator device (10) is rectifiable by means of a rectifier device (30);
- wherein the voltage generating apparatus (100) is regulable by means of a regulating apparatus (40, 50);
- wherein a current regulating device (50) comprises a model (54) of an exciter winding of the generator device (10), a model value of the electric excitation current (i_{err,modell}) of the generator device (10) being ascertainable by means of the model (54);
- wherein the current regulating device (50) further comprises a correction element (55), the latter rendering the model value of the electric excitation current (i_{err,modell}) correctable in such a way that the model value of the electric excitation current better matches an actual value (i_{err,ist}) of the electric excitation current in a defined manner,
- wherein the correction element (55) renders the model value of the electric excitation current (i_{err,modell}) correctable with the aid of a dead time-afflicted measured value of the electric excitation current (iₑᵣᵣ),
**characterized in that** the correction element (55) is designed such
- that a current, dead time-afflicted measured value of the electric excitation current (i_{err,mess}) and a delayed value of the model value of the electric excitation current (i_{err,modell}) are compared to one another,
- wherein a difference is used as a correction value for improving the model value of the electric excitation current (i_{err,modell}), wherein an electric excitation voltage (uₑᵣᵣ) for the exciter device (20) is generable by means of a regulating element (57) from the corrected model value of the electric excitation current (i_{err,korr}) and a setpoint value (i_{err,soll}) of the electric excitation current.

2. Voltage generating apparatus (100) according to Claim 1, **characterized in that** the correction element (55) further comprises a smoothing member (55b) for the correction value of the model value of the electric excitation current.

3. Voltage generating apparatus (100) according to Claim 2, **characterized in that** a dead time member (55a) of the correction element (55) has substantially the same dead time as the dead time between the actual value of the electric excitation current (i_{err,ist}) and the measured value of the electric excitation current (i_{err,mess})

4. Method for operating a voltage generating apparatus (100) comprising a mechanically driven, separately excited generator device (10) and a rectifier device (30) interconnected with the generator device (10), said method including the steps of:
- generating a rectified electric output voltage of the generator device (10);
- capturing, using measurement technology, a measured value of the electric excitation current (i_{err,mess}) for the generator device (10);
- creating a model value of the electric excitation current (i_{err,modell}) ;
- correcting the model value of the electric excitation current (i_{err,modell}) by means of a correction element (55) of a current regulating device (50) in such a way that the model value of the electric excitation current (i_{err,modell}) better matches an actual value (i_{err,ist}) of the electric excitation current (i_{err,mess}) in a defined manner, wherein the model value of the electric excitation current (i_{err,modell}) is corrected with the aid of a dead time-afflicted measured value of the electric excitation current (iₑᵣᵣ) by means of the correction element (55), **characterized in that** a current, dead time-afflicted measured value of the electric excitation current (i_{err,mess}) and a delayed value of the model value of the electric excitation current (i_{err,modell}) are compared with one another, wherein a difference is used as a correction value for improving the model value of the electric excitation current (i_{err,modell}) ; and
- generating an electric excitation voltage (uₑᵣᵣ) for an exciter device (20) of the generator device (10) from the corrected model value of the electric excitation current (i_{err,korr}) and a setpoint value (i_{err,soll}) of the electric excitation current.

5. Method according to Claim 4, wherein substantially the same dead time is used for a dead time member (55a) of the correction element (55) as a dead time between the actual value of the electric excitation current (i_{err,ist}) and the measured value of the electric excitation current (i_{err,mess}) .

## Revendications

1. Dispositif de production de tension (100), comprenant :
- un dispositif générateur (10) à entraînement mécanique et à excitation séparée ;
- une tension de sortie électrique du dispositif générateur (10) pouvant être redressée au moyen d'un dispositif redresseur (30) ;
- le dispositif de production de tension (100) pouvant être régulé au moyen d'un dispositif de régulation (40, 50) ;
- un dispositif de régulation de courant (50) comprenant un modèle (54) d'un enroulement d'excitation du dispositif générateur (10), une valeur modèle du courant d'excitation électrique (i_{err,modell}) du dispositif générateur (10) pouvant être déterminée au moyen du modèle (54) ;
- le dispositif de régulation de courant (50) comprenant en outre un élément de correction (55) au moyen duquel la valeur modèle du courant d'excitation électrique (i_{err,modell}) peut être corrigée de telle sorte que la valeur modèle du courant d'excitation électrique corresponde mieux à la valeur réelle (i_{err,ist}) du courant d'excitation électrique de façon définie,
- la valeur modèle du courant d'excitation électrique (i_{err, modell}) pouvant être corrigée au moyen de l'élément de correction (55) à l'aide d'une valeur de mesure avec temps mort du courant d'excitation électrique (iₑᵣᵣ),
- **caractérisé en ce que** l'élément de correction (55) est conçu de manière à ce
- qu'une valeur de mesure actuelle avec temps mort du courant d'excitation électrique (i_{err,mess}) et une valeur retardée de la valeur modèle du courant d'excitation électrique (i_{err,modell}) sont comparées l'une à l'autre,
- une différence étant utilisée comme valeur de correction pour améliorer la valeur modèle du courant d'excitation électrique (i_{err,modell}), une tension d'excitation électrique (uₑᵣᵣ) pour le dispositif d'excitation (20) pouvant être générée à partir de la valeur modèle corrigée du courant d'excitation électrique (i_{err,korr}) et d'une valeur de consigne (i_{err,soll)} du courant d'excitation électrique au moyen d'un élément de régulation (57).

2. Dispositif de production de tension (100) selon la revendication 1, **caractérisé en ce que** l'élément de correction (55) comprend en outre un élément de lissage (55b) pour la valeur de correction de la valeur modèle du courant d'excitation électrique.

3. Dispositif de production de tension (100) selon la revendication 2, **caractérisé en ce qu'**un élément de temps mort (55a) de l'élément de correction (55) a sensiblement le même temps mort que le temps mort entre la valeur réelle du courant d'excitation électrique (i_{err,ist}) et la valeur de mesure du courant d'excitation électrique (i_{err,mess}).

4. Procédé pour faire fonctionner un dispositif de production de tension (100) comportant un dispositif générateur (10) à entraînement mécanique et à excitation séparée et un dispositif redresseur (30) connecté au dispositif générateur (10), comprenant les étapes de :
- génération d'une tension de sortie électrique redressée du dispositif générateur (10) ;
- acquisition métrologique d'une valeur de mesure du courant d'excitation électrique (i_{err,mess}) pour le dispositif générateur (10) ;
- création d'une valeur modèle du courant d'excitation électrique (i_{err,modell})
- correction de la valeur modèle du courant d'excitation électrique (i_{err,modell}) au moyen d'un élément de correction (55) d'un dispositif de régulation de courant (50) de telle sorte que la valeur modèle du courant d'excitation électrique (i_{err,modell}) corresponde mieux à une valeur réelle (i_{err,ist}) du courant d'excitation électrique (i_{err,mess}) de façon définie, la valeur modèle du courant d'excitation électrique (i_{err,modell}) étant corrigée au moyen de l'élément de correction (55) à l'aide d'une valeur de mesure avec temps mort du courant d'excitation électrique (iₑᵣᵣ), **caractérisé en ce qu'**une valeur de mesure actuelle, avec temps mort, du courant d'excitation électrique (i_{err,mess}) et une valeur retardée de la valeur modèle du courant d'excitation électrique (i_{err,modell}) sont comparées l'une à l'autre, une différence étant utilisée comme valeur de correction pour améliorer la valeur modèle du courant d'excitation électrique (i_{err,modell}) ; et
- génération d'une tension d'excitation électrique (uₑᵣᵣ) pour un dispositif d'excitation (20) du dispositif générateur (10) à partir de la valeur modèle corrigée du courant d'excitation électrique (i_{err,korr}) et d'une valeur de consigne (i_{err,soll}) du courant d'excitation électrique.

5. Procédé selon la revendication 4, dans lequel sensiblement le même temps mort est utilisé pour un élément de temps mort (55a) de l'élément de correction (55) qu'un temps mort entre la valeur réelle du courant d'excitation électrique (i_{err,ist}) et la valeur de mesure du courant d'excitation électrique (i_{err,mess}) .
